# EUROPÄISCHE PATENTANMELDUNG

(11) **EP 0 873 892 A2**
(43) Veröffentlichungstag der Anmeldung: **28.10.1998**
(21) Anmeldenummer: 98106559.2
(22) Anmeldetag: 09.04.1998
(51) Int. Cl.: B60G 9/00, B60G 21/05, B60G 11/113

(54) **Achseinbindung für Luftfederachsen oder Blattfederachsen**

(30) Priorität: 22.04.1997 DE 19716770
(71) Anmelder: BPW Bergische Achsen Kommanditgesellschaft, 51674 Wiehl (DE)
(72) Erfinder: Berghaus, Roland, 51766 Engelskirchen (DE); Kopplow, Hans W., 51588 Nümbrecht (DE)
(74) Vertreter: Stenger, Watzke & Ring Patentanwälte

(57) **Zusammenfassung**

Die Erfindung betrifft eine Achseinbindung für Luftfederachsen oder Blattfederachsen mit einem Achskörper (5), den Achskörper (5) kreuzenden Längslenkern (3) oder Blattfedern sowie beidseitig des Achskörpers (5) angeordneten, den Achskörper (5) mit dem Längslenker (3) oder der Blattfeder verbindenden U-förmigen Haltebügeln (10), wobei die Außenkontur der Längslenker (3) und der Blattfedern im Bereich der Verbindung mit dem Achskörper (5) zur formschlüssigen Anlage am Achskörper (5) und/oder an den Haltebügeln (10) an die Kontur des Achskörpers (5) und/oder der Haltebügel (10) angepaßt ist. Um eine kompakte und einfach zu montierende Achseinbindung zu schaffen, bei der die Gefahr von Relativbewegungen zwischen den einzelnen Bauteilen deutlich reduziert ist, sind die im Bereich der Verbindung mit dem Achskörper (5) geradlinig durchlaufenden Längslenker (3) oder Blattfedern auf der Unterseite und/oder der Oberseite mit jeweils zwei parallel zum Achskörper (5) und im Abstand voneinander verlaufenden, der formschlüssigen Festlegung des Achskörpers (5) und/oder der Haltebügel (10) in Längsrichtung der Längslenker (3) oder Blattfedern dienenden Erhebungen (11, 12) versehen.

## Beschreibung

Die Erfindung betrifft eine Achseinbindung für Luftfederachsen oder Blattfederachsen mit einem Achskörper, den Achskörper kreuzenden Längslenkern oder Blattfedern sowie beidseitig des Achskörpers angeordneten, den Achskörper mit dem Längslenker oder der Blattfeder verbindenden U-förmigen Haltebügeln, wobei die Außenkontur der Längslenker und der Blattfedern im Bereich der Verbindung mit dem Achskörper zur formschlüssigen Anlage am Achskörper und/oder an den Haltebügeln an die Kontur des Achskörpers und/oder der Haltebügel angepaßt ist.

Achseinbindungen der voranstehend genannten Art sind aus der Praxis seit langem in verschiedenen Ausführungsformen bekannt Diese bekannten Achseinbindungen sind in der Regel so aufgebaut, daß der einzubindende Achskörper unterhalb der Längslenker oder Blattfedern angeordnet ist. Pro Längslenker oder Blattfeder sind zwei U-förmige Haltebügel vorgesehen, die auf beiden Seiten des Achskörpers so von oben auf den Längslenker bzw. die Blattfeder aufgesetzt werden, daß die freien Enden der Haltebügel die dem Längslenker abgewandte Unterseite des Achskörpers überragen. Um durch eine formschlüssige Einbindung des Achskörpers, des Längslenkers oder der Blattfedern sowie der Haltebügel eine unverrückbare Achseinbindung zu schaffen, sind zwischen der Unterseite jedes Längslenkers bzw. jeder Blattfeder und der Oberseite des Achskörpers Anschlußplatten angeordnet, deren Außenkontur an die Kontur des Achskörpers sowie des Längslenkers oder der Blattfeder angepaßt ist. Weiterhin sind auf der Oberseite des Längslenkers bzw. der Blattfeder sowie an der Unterseite des Achskörpers Lagerplatten angeordnet, die einerseits an die Kontur der Haltebügel und andererseits an die Kontur des Achskörpers angepaßt sind. Durch das Anziehen der Sicherungselemente an den freien Enden der Haltebügel wird die aus jeweils mindestens sieben Teilen, nämlich einem Längslenker bzw. einer Blattfeder, einem Achskörper, zwei Haltebügeln, zwei Lagerplatten sowie einer Anschlußplatte bestehende Konstruktion so miteinander verspannt, daß sich eine kraftschlüssige Einheit ergibt. Diese aus vielen Einzelteilen bestehende bekannte Achseinbindung hat den Nachteil, daß die Montage der verschiedenen Einzelteile umständlich und zeitintensiv und somit auch kostenintensiv ist und darüber hinaus das Gesamtgewicht des Achsaggregats durch die verschiedenen Einzelteile deutlich erhöht wird. Weiterhin ist bei dieser bekannten Achseinbindung nachteilig, daß es aufgrund der Mehrschnittigkeit zwischen den einzelnen Bauteilen zu Setzerscheinungen zwischen diesen Bauteilen kommen kann, die zu einer Lockerung der Achseinbindung führen.

Eine weitere Achseinbindung ist aus der DE 42 32 779 C1 bekannt. Bei dieser bekannten Achseinbindung umgreifen die U-förmigen Haltebügel den Achskörper von unten und überragen mit ihren freien Enden den Längslenker bzw. die Blattfeder beidseitig. Bei dieser bekannten Konstruktion ist es ebenfalls notwendig, zur Erzielung einer kraftschlüssigen Verbindung zwischen Achskörper und Längslenker bzw. Blattfeder, Anschlußplatten, Lagerplatten sowie zusätzliche Füllstücke zur gegenseitigen Konturanpassung zu verwenden. Somit weist auch diese bekannte Achseinbindung die Nachteile einer umständlichen Montage, eines hohen Eigengewichts und der Mehrschnittigkeit zwischen den einzelnen Bauteilen auf, die zu Relativbewegungen zwischen diesen Bauteilen führen kann.

Aus der DE 296 15 286 U1 war schließlich eine Achseinbindung der eingangs beschriebenen Art bekannt, bei der ein im Querschnitt kreisrohrförmiger Achskörper im Einbindungsbereich einen unrund verformten Profilabschnitt aufweist und der Längslenker zur formschlüssigen Anlage am Achskörper der Kontur dieses unrunden Profilabschnittes durch einen etwa V-förmigen Verlauf angepaßt ist. Durch diese V-förmige Gestaltung des Längslenkers im Einbindungsbereich ergeben sich gleichzeitig Ausrundungen für die Stege der Haltebügel. Mit dieser bekannten Konstruktion ergibt sich zwar theoretisch eine formschlüssige Anlage des Längslenkers einerseits am Achskörper und andererseits an den Stegen der Haltebügel; die V-förmige Gestaltung des Längslenkers im Einbindungsbereich verringert jedoch gerade in diesem Bereich dessen Formstabilität, so daß eine setzungsfreie und formschlüssige Einspannung gerade nicht erzielt werden kann.

Ausgehend von diesem bekannten Stand der Technik liegt der Erfindung die **Aufgabe** zugrunde, eine Achseinbindung der eingangs genannten Art zu schaffen, die einfach und kostengünstig zu montieren ist und darüber hinaus eine im wesentlichen setzerscheinungsfreie formschlüssige Verspannung von Achskörper und Längslenker bzw. Blattfeder ergibt.

Die **Lösung** dieser Aufgabenstellung durch die Erfindung ist dadurch gekennzeichnet, daß die im Bereich der Verbindung mit dem Achskörper geradlinig durchlaufenden Längslenker oder Blattfedern auf der Unterseite und/oder der Oberseite mit jeweils zwei parallel zum Achskörper und im Abstand voneinander verlaufenden, der formschlüssigen Festlegung des Achskörpers und/oder der Haltebügel in Längsrichtung der Längslenker oder Blattfedern dienenden Erhebungen versehen sind.

Durch diese Anpassung der Außenkontur der Längslenker bzw. der Blattfedern an die Konturen des Achskörpers und/oder der Haltebügel ist es möglich, auf zusätzliche Formteile zwischen Achskörper und Längslenkern bzw. Blattfedern und Haltebügeln zu verzichten. Neben einer deutlichen Gewichtsreduzierung und Vereinfachung der Montage wird somit erreicht, daß aufgrund der Reduzierung der Schnittfugen eine im wesentlichen setzerscheinungsfreie, formschlüssige Verbindung zwischen Achskörper und Längslenkern bzw. Blattfedern geschaffen wird.

Gemäß einer bevorzugten Ausführungsform der Erfindung ist der Achskörper durch die einander benachbarten Schultern der beiden Erhebungen formschlüssig eingespannt, so daß die dem Achskörper zugewandte Unterseite der Längslenker oder Blattfedern unmittelbar zur formschlüssigen Anlage am Achskörper dient. Weiterhin kann gemäß der Erfindung der Steg der U-förmigen Haltebügel jeweils durch eine in den Erhebungen ausgebildete Hohlkehle formschlüssig eingespannt sein. Eine solche Ausgestaltung ist besonders vorteilhaft, da die Anzahl der miteinander zu verbindenden Bauteile durch die beidseitige Anpassung der Außenkontur der Längslenker oder Blattfedern an die Kontur einerseits des Achskörpers und andererseits der Haltebügel auf ein Minimum reduziert wird. Diese Ausgestaltung garantiert somit eine leicht zu montierende und unmittelbare formschlüssige Verbindung zwischen Achskörper und Längslenkern oder Blattfedern sowie Längslenkern oder Blattfedern und den Haltebügeln.

Bei einer zweiten Ausführungsform einer erfindungsgemäß ausgebildeten Achseinbindung sind die Haltebügel auf der dem Achskörper gegenüberliegenden Seite der Längslenker oder Blattfedern durch eine diese kreuzende Lagerplatte festgelegt. Diese Ausführungsform ermöglicht bei nur einseitiger Bearbeitung oder Verformung der Längslenker oder der Blattfedern eine formschlüssige Verbindung zwischen den Haltebügeln und den Längslenkern bzw. Blattfedern unter Verwendung nur eines zusätzlichen Bauteils. Die Stege der U-förmigen Haltebügel können hierbei erfindungsgemäß in Hohlkehlen der Lagerplatten formschlüssig festgelegt sein. Weiterhin werden die auf den freien Enden der Schenke der U-förmigen Haltebügel angeordneten Sicherungselemente an der Lagerplatte festgelegt.

Gemäß einer dritten Ausführungsform der Erfindung kann der Achskörper am Längslenker oder an der Blattfeder durch eine seine dem Längslenker oder der Blattfeder zugewandte Seite formschlüssig einspannende Anschlußplatte festgelegt werden, die ihrerseits durch die in den Erhebungen formschlüssig eingespannten Haltebügel am Längslenker oder der Blattfeder befestigt ist. Auch diese erfindungsgemäße Ausbildung der Achseinbindung ermöglicht eine einfache Montage der Achseinbindung.

Schließlich wird mit der Erfindung vorgeschlagen, die freien Enden der Schenke der paarweise zusammengehörenden Haltebügel durch eine den Achskörper kreuzende und formschlüssig einspannende Lagerplatte miteinander zu verbinden. Diese auf die freien Enden der Haltebügel aufgesetzte Lagerplatte stellt den unteren Abschluß der erfindungsgemäßen Achseinbindung dar und überträgt die von den Sicherungselementen aufgebrachten Einspannkräfte großflächig auf den Achskörper.

Weitere Einzelheiten und Vorteile der Erfindung ergeben sich aus der nachfolgenden Beschreibung der zugehörigen Zeichnung, in der vier Ausführungsbeispiele einer erfindungsgemäß ausgebildeten Achseinbindung für Luftfederachsen dargestellt sind. In der Zeichnung zeigt.
- Fig. 1: eine schematische Seitenansicht einer Luftfederachse im normalen Fahrbetrieb mit einer ersten Ausführungsform einer Achseinbindung;
- Fig. 2: eine Seitenansicht einer zweiten Ausführungsform einer Achseinbindung;
- Fig. 3: eine Seitenansicht einer dritten Ausführungsform einer Achseinbindung und
- Fig. 4: eine Seitenansicht einer vierten Ausführungsform einer Achseinbindung.

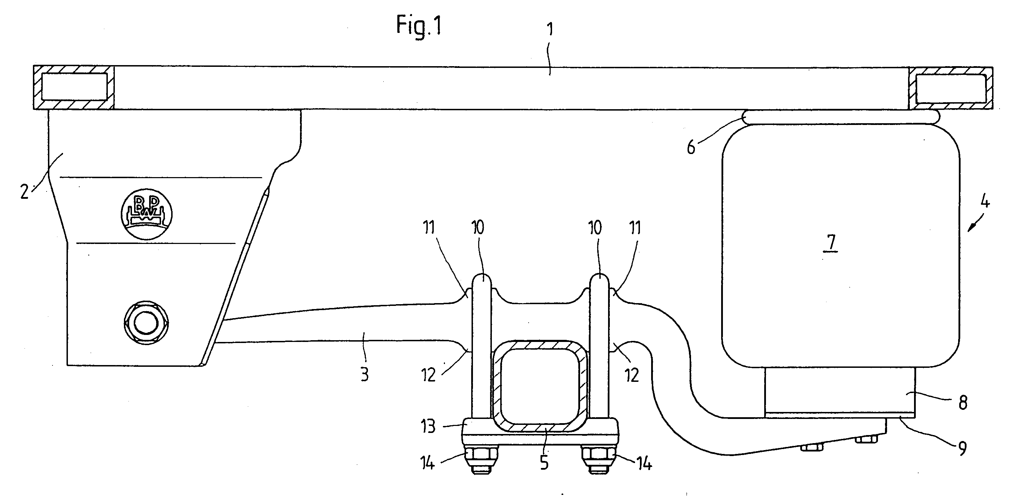

Bei der in Fig. 1 dargestellten Luftfederachse ist zwischen einem Teil eines Fahrzeugrahmens 1 und einem an einer Konsole 2 schwenkbar angelenkten Längslenker 3 eine Luftfeder 4 für einen Achskörper 5 angeordnet.

Die Luftfeder 4 besteht aus einem am Fahrzeugrahmen 1 befestigten Deckel 6, einem Rollbalg 7 sowie einem sich auf dem Längslenker 3 abstützenden Tauchkolben 8, der mit einer Bodenplatte 9 auf dem Längslenker 3 befestigt ist.

Bei dem in Fig. 1 dargestellten ersten Ausführungsbeispiel besteht die Achseinbindung zum Festlegen des Achskörpers 5 am Längslenker 3 aus zwei U-förmigen Haltebügeln 10, die auf beiden Seiten des den Längslenker 3 kreuzenden Achskörpers 5 von oben so auf den Längslenker 3 aufgesetzt sind, daß die freien Enden der Haltebügel 10 im montierten Zustand die Unterseite des Achskörpers 5 überragen.

Zur Ausbildung einer formschlüssigen Verbindung zwischen Achskörper 5 und Längslenker 3 einerseits sowie den Haltebügeln 10 und dem Längslenker 3 andererseits ist bei dieser Ausführungsform die Außenkontur des Längslenkers 3 im Bereich der Verbindung mit dem Achskörper 5 sowohl an die Außenkontur des Achskörpers 5 als auch an die Kontur der Haltebügel 10 angepaßt.

Wie aus Fig. 1 ersichtlich, sind zur Anpassung der Kontur des Längslenkers 3 an die Kontur der Haltebügel 10 auf der Oberseite des Längslenkers 3 mit Abstand zueinander zwei parallel zum Achskörper 5 verlaufende, mit einer mittigen Hohlkehle versehene Erhebungen 11 - beispielsweise durch Schmieden - ausgebildet. Zur formschlüssigen Anlage des Achskörpers 5 am Längslenker 3 sind auf der Unterseite des Achskörpers 3 gegenüber den Erhebungen 11 Erhebungen 12 ausgebildet. Die Montage einer solchen Achseinbindung ist einerseits aufgrund der Reduzierung der zu verwendenden Bauteile einfach und schnell möglich, und zwar auch deshalb, weil die Lagefixierung des Achskörpers 5 sowie der Haltebügel 10 bezüglich des Längslenkers 3 durch die Ausbildung der Erhebungen 11 und 12 auf der Oberseite und Unterseite des Längslenkers 3 vorgegeben ist. Zur Montage der Achseinbindung werden zunächst die Haltebügel 10 so auf den Längslenker 3 aufgesetzt, daß die Haltebügel 10 formschlüssig in die Hohlkehlen der Erhebungen 11 eingreifen. Anschließend wird der Achskörper 5 von unten zwischen die freien Schenkel der Haltebügel 10 eingeführt bis er am Längslenker 3 anliegt, wobei der Achskörper 5 in Längsrichtung des Längslenkers 3 durch die auf der Unterseite des Längslenkers 3 ausgebildeten Erhebungen 12 lagefixiert ist. Die abschließende Einspannung des Achskörpers 5 erfolgt über eine auf die freien Enden der Haltebügel 10 aufgesetzte Lagerplatte 13, die über beispielsweise als Sicherungsmuttern ausgebildete Sicherungselemente 14 gehalten wird. Durch Anziehen der Sicherungselemente 14 wird die Lagerplatte 13, deren dem Achskörper 5 zugewandte Kontur an die Außenkontur des Achskörpers 5 angepaßt ist, großflächig formschlüssig gegen den Achskörper 5 gedrückt. Aufgrund der Anpassung der Außenkontur des Längslenkers 3 sowohl an die Außenkontur des Achskörpers 5 als auch an die Kontur der Haltebügel 10 ergibt sich bei diesem Ausführungsbeispiel eine direkte formschlüssige Verbindung zwischen Achskörper 5 und Längslenker 3 sowie Längslenker 3 und Haltebügel 10 mit einer minimalen Anzahl von Bauteilen.

Neben der Vereinfachung der Montage ergibt sich bei einer solchen Ausgestaltung der Achseinbindung aufgrund der Einsparung von Bauteilen eine deutliche Gewichtsersparnis, die wiederum eine Erhöhung der Ladekapazität eines mit einer solchen Achseinbindung versehenen Fahrzeuges ermöglicht. Durch die Verminderung der Schnittfugen zwischen den einzelnen Bauteilen sowie durch das Festlegen des Achskörpers 5 sowie der Haltebügel 10 an den Erhebungen 12 und 11 wird weiterhin die Möglichkeit des Auftretens von Relativbewegungen zwischen den einzelnen Bauteilen auf ein Minimum reduziert, wodurch die Gefahr der Lockerung einer solchen Achseinbindung deutlich reduziert wird.

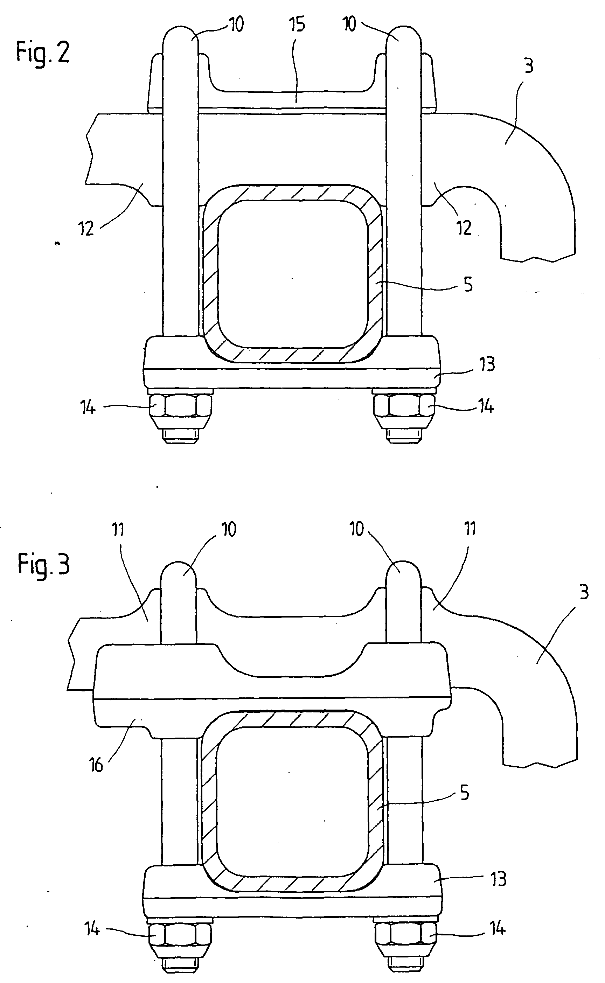

Bei der in Fig. 2 dargestellten zweiten Ausführungsform einer Achseinbindung ist die Außenkontur des Längslenkers 3 nur auf der dem Achskörper 5 zugewandten Unterseite des Längslenkers 3 durch Ausbildung der Erhebungen 12 an die Kontur des Achskörpers 5 angepaßt. Zur Ausbildung einer formschlüssigen Verbindung zwischen dem Längslenker 3 und den Haltebügeln 10 ist auf der Oberseite des Längslenkers 3 eine Lagerplatte 15 angeordnet, die an die Konturen des Längslenkers 3 einerseits und der Haltebügel 10 andererseits angepaßt ist. Ansonsten entspricht diese Ausführungsform der in Fig. 1 dargestellten und detailliert beschriebenen Achseinbindung. Aufgrund der Ausbildung der Erhebungen 12 auf der Unterseite des Längslenkers 3 ergibt sich auch bei dieser Ausführungsform beim Verspannen der Achseinbindung über die Sicherungselemente 14 sowie die Lagerplatte 13 eine direkte formschlüssige Verbindung zwischen dem Achskörper 5 und dem Längslenker 3.

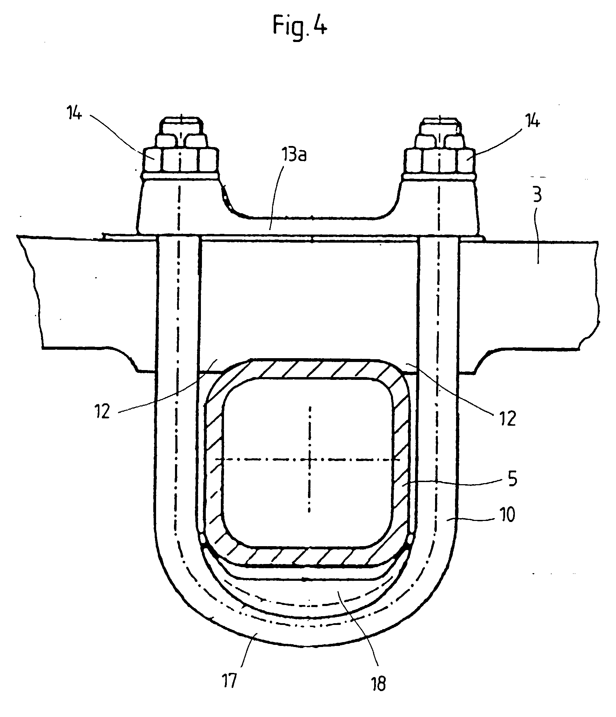

Bei der in Fig. 3 dargestellten dritten Ausführungsform einer Achseinbindung ist wie beim Ausführungsbeispiel gemäß Fig. 2 die Außenkontur nur einer Seite des Längslenkers 3 für eine formschlüssige Verbindung ausgebildet. Bei dieser Ausführungsform sind auf der der Auflage der Haltebügel 10 dienenden Oberseite des Längslenkers 3 im Abstand zueinander zwei Erhebungen 11 ausgebildet, auf die die Federbügel 10 formschlüssig aufsetzbar sind. Die formschlüssige Verbindung zwischen Achskörper 5 einerseits und Längslenker 3 andererseits wird bei dieser Ausführungsform über eine auf die freien Enden der Haltebügel 10 aufgesetzte Anschlußplatte 16 bewerkstelligt, deren Außenkontur an die des Achskörpers 5 sowie des Längslenkers 3 angepaßt ist. Wenn die Außenkontur nur einer Seite des Längslenkers 3 - beispielsweise durch Schmieden - bearbeitet werden soll, ist die Ausführungsform gemäß Fig. 3 besonders montagefreundlich, da aufgrund der Erhebungen 11 die Haltebügel 10 direkt in der richtigen Position auf dem Längslenker 3 angeordnet werden. Im nachfolgenden Montageschritt ist es lediglich notwendig, die Anschlußplatte 16 auf die freien Enden der Haltebügel 10 aufzuschieben und anschließend den zwischen die Schenkel der Haltebügel 10 eingefügten Achskörper 5 über die Lagerplatte 13 und die Sicherungselemente 14 zu verspannen.

Bei der in Fig. 4 dargestellten letzten Ausführungsform der Achseinbindung sind die paarweise verwendeten Haltebügel 10 im Vergleich zu den Fig. 1 bis 3 andersherum montiert. Hierbei umschlingen die Stege 17 die Unterseite des Achskörpers 5, während sich die freien Enden der Haltebügel 10 mit den Sicherungselementen 14 auf der Oberseite des Längslenkers 3 bzw. der Blattfeder befinden. Zur Angleichung der Kontur der Stege 17 an die Unterseite des Achskörpers 5 ist dort ein Formstück 18 eingesetzt. Ähnlich wie bei den Fig. 1 und 2 liegt auch bei der Ausführungsform gemäß Fig. 4 die Oberseite des Achskörpers 5 zwischen Erhebungen 12 auf der Unterseite des Längslenkers 3. Auf diese Weise ergibt sich auch bei dieser Ausführungsform beim Verspannen der Achseinbindung über die Sicherungselemente 14 sowie die Lagerplatte 13a eine direkte formschlüssige Verbindung zwischen dem Achskörper 5 und dem Längslenker 3. Dabei sind die freien Enden der Haltebügel 10 über die den Längslenker 3 auf dessen Oberseite kreuzende Lagerplatte 13a miteinander verbunden.

Neben der in den Abbildungen Fig. 1 bis 4 dargestellten Verwendung dieser Achseinbindungen zum Festlegen eines Achskörpers 5 an einem Längslenker 3 ist diese Art der Achseinbindung selbstverständlich auch zum formschlüssigen Festlegen eines Achskörpers 5 an einer Blattfeder geeignet. Außer einer Reduzierung der Anzahl der zu verwendenden Bauteile und somit der Gesamtmasse der Achseinbindung haben die dargestellten Achseinbindungen den Vorteil, daß sie einfach und somit kostengünstig zu montieren sind.

### Bezugszeichenliste

- 1: Fahrzeugrahmen
- 2: Konsole
- 3: Längslenker
- 4: Luftfeder
- 5: Achskörper
- 6: Deckel
- 7: Rollbalg
- 8: Tauchkolben
- 9: Bodenplatte
- 10: Haltebügel
- 11: Erhebung
- 12: Erhebung
- 13: Lagerplatte
- 13a: Lagerplatte
- 14: Sicherungselement
- 15: Lagerplatte
- 16: Anschlußplatte
- 17: Steg
- 18: Formstück

## Patentansprüche

1. Achseinbindung für Luftfederachsen oder Blattfederachsen mit einem Achskörper (5), den Achskörper (5) kreuzenden Längslenkern (3) oder Blattfedern sowie beidseitig des Achskörpers (5) angeordneten, den Achskörper (5) mit dem Längslenker (3) oder der Blattfeder verbindenden U-förmigen Haltebügeln (10), wobei die Außenkontur der Längslenker (3) und der Blattfedern im Bereich der Verbindung mit dem Achskörper (5) zur formschlüssigen Anlage am Achskörper (5) und/oder an den Haltebügeln (10) an die Kontur des Achskörpers (5) und/oder der Haltebügel (10) angepaßt ist,
**dadurch gekennzeichnet**,
daß die im Bereich der Verbindung mit dem Achskörper (5) geradlinig durchlaufenden Längslenker (3) oder Blattfedern auf der Unterseite und/oder der Oberseite mit jeweils zwei parallel zum Achskörper (5) und im Abstand voneinander verlaufenden, der formschlüssigen Festlegung des Achskörpers (5) und/oder der Haltebügel (10) in Längsrichtung der Längslenker (3) oder Blattfedern dienenden Erhebungen (11, 12) versehen sind.

2. Achseinbindung nach Anspruch 1, dadurch gekennzeichnet, daß der Achskörper (5) durch die einander benachbarten Schultern der beiden Erhebungen (12) formschlüssig eingespannt sind.

3. Achseinbindung nach Anspruch 1, dadurch gekennzeichnet, daß der Steg der U-förmigen Haltebügel (10) jeweils durch eine in den Erhebungen (11) ausgebildete Hohlkehle formschlüssig eingespannt ist.

4. Achseinbindung nach Anspruch 2, dadurch gekennzeichnet, daß die Haltebügel (10) auf der dem Achskörper (5) gegenüberliegenden Seite der Längslenker (3) oder Blattfedern durch eine diese kreuzende Lagerplatte (15, 13a) festgelegt sind (Fig. 2 und 4).

5. Achseinbindung nach Anspruch 4, dadurch gekennzeichnet, daß die Stege der U-förmigen Haltebügel (10) in Hohlkehlen der Lagerplatten (15) formschlüssig festgelegt sind (Fig. 2).

6. Achseinbindung nach Anspruch 4, dadurch gekennzeichnet, daß die auf den freien Enden der Schenkel der U-förmigen Haltebügel (10) angeordneten Sicherungselemente (14) an der Lagerplatte (13a) festgelegt sind (Fig. 4).

7. Achseinbindung nach Anspruch 3, dadurch gekennzeichnet, daß der Achskörper (5) am Längslenker (3) oder an der Blattfeder durch eine seine dem Längslenker (3) oder der Blattfeder zugewandte Seite formschlüssig einspannende Anschlußplatte (16) festgelegt ist, die ihrerseits durch die in den Erhebungen (11) formschlüssig eingespannten Haltebügel (10) am Längslenker (3) oder der Blattfeder befestigt ist (Fig. 3).

8. Achseinbindung nach einem der Ansprüche 1 bis 7, dadurch gekennzeichnet, daß die freien Enden der Schenkel der paarweise zusammengehörenden Haltebügel (10) durch eine den Achskörper (5) kreuzende und formschlüssig einspannende Lagerplatte (13) miteinander verbunden sind (Fig.1, 2 und 3).
